# EUROPÄISCHE PATENTANMELDUNG

(11) **EP 1 927 866 A1**
(43) Veröffentlichungstag der Anmeldung: **04.06.2008**
(21) Anmeldenummer: 07117855.2
(22) Anmeldetag: 04.10.2007
(51) Int. Cl.: G01S 13/72, G01S 13/86

(54) **Verfahren zum gitterbasierten Verarbeiten von Sensorsignalen**

(30) Priorität: 01.12.2006 DE 102006056835
(71) Anmelder: ROBERT BOSCH GMBH, 70442 Stuttgart (DE)
(72) Erfinder: Becker, Jan-Carsten, 34246 Vellmar (DE)

(57) **Zusammenfassung**

Die Erfindung betrifft ein Verfahren zum gitterbasierten Verarbeiten von Sensorsignalen, bei dem einem Feld (60) einer Basis (28, 42), die über mindestens eine erste kinematische Größe definiert wird, mindestens eine Zelle (30) eines Gitters zugeordnet wird, und bei dem der Zelle (30) mindestens ein Wert für mindestens eine zweite kinematische Größe, die aus mindestens einem Sensorsignal abgeleitet wird, angehängt wird.

## Beschreibung

Die Erfindung betrifft ein Verfahren zum gitterbasierten Verarbeiten von Sensorsignalen, eine Fahrerassistenzeinrichtung zur Durchführung des Verfahrens sowie ein Computerprogramm und ein Computerprogrammprodukt.

### Stand der Technik

Aus der Informatik und Robotik sind Verfahren zur Sensorsignalverarbeitung bei Systemen zur Umgebungserfassung von Robotern bekannt, bei denen der interessierende Detektionsbereich der Sensoren in eine vorgegebene Anzahl von Feldern aufgeteilt wird und für jedes Feld ein Wahrscheinlichkeitswert als Maß für das Vorhandensein eines Hindernisses in dem jeweiligen Feld bestimmt wird. Diese Verfahren werden als gitterbasierte Verfahren, bspw. Occupancy-Grids-Verfahren, Belief Grids-Verfahren oder Evidence-Grids-Verfahren bezeichnet.

Diese Verfahren bzw. Varianten dieser Verfahren werden auch zur Sensorsignalverarbeitung und Sensordatenfusion in Fahrerassistenzsystemen für Kraftfahrzeuge eingesetzt.

Bei gitterbasierten Verfahren in der Robotik kommen einfache Ultraschallsensoren zum Einsatz, bei denen lediglich Positionsdaten gemessen werden und dementsprechend auch der im Gitterraum abgebildete Zustandsraum nur aus zweidimensionalen Positionsdaten besteht.

Bei der Anwendung für Fahrerassistenzsysteme in Kraftfahrzeugen kommen jedoch komplexe Sensoren (z. B. Radar, Video oder Lidar) zum Einsatz, bei denen neben den Positionsdaten auch Geschwindigkeits- und ggf. Beschleunigungsdaten gemessen oder geschätzt werden. Werden derartige Zustandsdaten ebenfalls im Gitter abgelegt, dann erhöht sich die Ordnung des Zustandsraumes auf bis zu sechs Dimensionen.

Ein Grundproblem bei der Anwendung von gitterbasierten Verfahren für Fahrerassistenzsysteme ist somit die Größe des erzeugten Zustandsraumes und die daraus resultierende Speicher- und Rechenkomplexität.

Folgendes numerisches Beispiel berücksichtigt typische Erfassungsbereiche objekterkennender Sensoren für Kraftfahrzeuge:
- Eine Position in Längsrichtung wird dabei in einem Bereich von 0 m bis 256 m mit einer Auflösung von 0.25 m bestimmt. Daraus ergeben sich 1024 benötigte Zellen.
- Eine Position in Querrichtung wird in einem Bereich von -64 m bis +64 m mit einer Auflösung von 0.25 m bestimmt. Daraus ergeben sich 512 benötigte Zellen.
- Geschwindigkeitsdaten in Längs- und Querrichtung werden jeweils in einem Bereich von -64 m/s bis +64 m/s mit einer Auflösung von 0.5 m/s bestimmt. Daraus ergeben sich zweimal 256 benötigte Zellen.
- Beschleunigungsdaten in Längs- und Querrichtung werden jeweils in einem Bereich von -16 m/s2 bis +16 m/s² mit einer Auflösung von 0.125 m/s² bestimmt. Daraus ergeben sich zweimal 256 benötigte Zellen.

Bei diesen Beispiel ergibt sich somit ein Bedarf von 1024 x 512 x 256 x 256 x 256 x 256, also 2251799813685248 Zellen. Wird für jede Zelle ein Wahrscheinlichkeitswert als Float bzw. Datentyp mit 4 Byte abgelegt, dann ergibt sich allein für das Zellgitter ein Speicherbedarf von 9007199254740992 Byte bzw. 8796093022208 kB bzw. 8589934592 MB bzw. 8388608 GB bzw. 8192 TB.

Es ist offensichtlich, dass dieser Speicherbedarf weder in einem Steuergerät noch in einer prototypischen Implementierung in einem Versuchsrechner zur Verfügung steht.

Aus der Druckschrift DE 10 2004 007 553 A1 ist ein Verfahren zur Umfelderfassung für ein Kraftfahrzeugsicherheitssystem bekannt, bei dem die relevante Umgebung des Fahrzeugs in diskrete Zellen oder Felder unterteilt wird und auf das Vorhandensein von Hindernissen im Umgebungsbereich des Kraftfahrzeugs geschlossen wird. Hierzu wird der Wahrscheinlichkeitswert jedes Felds mit einem vorgegebenen Wahrscheinlichkeitsschwellwert verglichen. Wenn der Wahrscheinlichkeitswert größer als der vorgegebene Wahrscheinlichkeitsschwellwert ist, so wird auf das Vorhandensein eines Hindernisses in diesem Feld geschlossen.

In der Druckschrift DE 10 2004 032 118 A1 ist ein gitterbasiertes Verfahren zur Objekterkennung beschrieben, bei dem Abstände in einem Gitter und somit die Auflösung der Zellen funktionsbezogen optimiert gestaltet sind.

Die Druckschrift DE 10 2004 039 095 A1 beschreibt ein System zur Erkennung von Fußgängern mittels Thermopilesensoren, in dem die Zuordnung der Sensordaten zueinander in einem Gitter Grid-of-Evidence-Verfahren erfolgt.

Die Verarbeitung und Fusion von Daten von Radar- und Lidarsensoren zur sicheren Detektion von Objekten mit einem gitterbasierten Verfahren ist bspw. in der Druckschrift EP 1 672 390 A1 beschrieben.

### Offenbarung der Erfindung

Die Erfindung betrifft ein Verfahren zum gitterbasierten Verarbeiten von Sensorsignalen, bei dem einem Feld einer Basis, die über mindestens eine erste kinematische Größe definiert wird, mindestens eine Zelle eines Gitters zugeordnet wird, und bei dem der Zelle mindestens ein Wert für mindestens eine zweite kinematische Größe, die aus mindestens einem Sensorsignal abgeleitet wird, angehängt wird.

Als mindestens eine kinematische Größe kann jede Größe benutzt werden, die dazu geeignet ist, einen Ort und somit auch eine Bewegung mindestens eines Körpers oder Punkts im Raum insbesondere zeitabhängig zu beschreiben, somit kann eine Trajektorie und somit eine Orts- oder Bewegungskurve des Körpers erfasst werden.

Dabei umfassen kinematische Größen Koordinaten eines je nach Anwendung geeignet zu wählenden Koordinatensystems, bei Koordinaten handelt es sich in Ausgestaltung der Erfindung um mindestens eine der drei Raumrichtungen, durch die die Basis definiert werden kann. Die Raumrichtungen x, y und z sind in der Regel zueinander senkrecht und somit über kartesische Koordinaten bestimmt. Es ist anwendungsbezogen auch möglich, dass die Koordinaten zueinander andere, nicht-rechtwinklige Winkel aufweisen. Falls die Basis über Polarkoordinaten definiert wird, können als kinematische Größen Abstände und Winkel vorgesehen sein.

Als die mindestens eine kinematische Größe können auch zeitliche Ableitungen der voranstehend beschriebenen kinematischen Größen, durch die die Position bestimmt wird, berücksichtigt werden. Hierbei handelt es sich um die bspw. vektorielle oder richtungsabhängige Geschwindigkeit, insbesondere Winkelgeschwindigkeit, und/oder die bspw. vektorielle oder richtungsabhängige Beschleunigung, insbesondere Winkelbeschleunigung.

Mit der Erfindung wird durch Bereitstellung der Zellen, die den Feldern oder Punkten der Basis zugeordnet werden oder sind, mit dem Gitter ein gitterbasierter Zustandsraum bereitgestellt. Als Basis kann hierbei ein ein-, zwei- oder dreidimensionaler Ortsraum vorgesehen sein. Es ist jedoch auch möglich, die Basis bspw. über einen Abstand und eine Geschwindigkeit und somit aus einem Orts-Geschwindigkeitsraum zu bilden. Als eine weitere kinematische Größe zur Definition der Basis oder des Gitters kann neben dem Winkel auch eine Querablage benutzt werden, über die eine Abweichung quer zu einer Bewegungsrichtung definiert werden kann.

In weiterer Ausgestaltung kann der Zelle mindestens ein Wert für mindestens ein Attribut angehängt werden. Je nach Anzahl von Attributen, die in einem gitterbasierten Zustandsraum, der über das Verfahren bereitgestellt werden kann, vorgesehen sind, ist pro Feld oder Punkt der Basis eine entsprechende Anzahl von Zellen zuzuordnen, wobei jeder Zelle als Attribut der mindestens eine Wert der mindestens einen kinematischen Größe angehängt wird.

Ein Gitter zur Bereitstellung des Zustandsraums besteht demnach aus der Basis bzw. den Feldern der Basis, die den Zustandsraums bilden. Die vorzusehenden Attribute werden über die Zellen bereitgestellt bzw. festgelegt, wobei jede Zelle ortsabhängig und ggf. geschwindigkeitsabhängig einem Feld der Basis zugeordnet ist. In der Regel wird allen Zellen der mindestens eine Wert für die mindestens eine kinematische Größe oder das mindestens eine Attribut angehängt. Es sind jedoch auch Varianten denkbar, bei denen bestimmte Werte nur bestimmten Zellen und somit nicht allen Zellen angehängt werden.

Wie bereits erwähnt, kann als die mindestens eine kinematische Größe in Ausgestaltung eine Position, eine Geschwindigkeit und/oder eine Beschleunigung als Attribut für die Zelle berücksichtigt werden. Es ist typischerweise vorgesehen, dass über die Sensorsignale Objekte und insbesondere ein Vorhandensein von Objekten in einem von mindestens einem Sensor erfassten Raumbereich bestimmt wird. Durch Berücksichtigung der kinematischen Größen ist es möglich, eine Bewegung eines Objekts in einem Umfeld oder einer Umgebung eines Sensors zu bestimmen.

Unabhängig von einer Anzahl der Dimensionen, durch die die Basis aufgespannt und somit festgelegt wird, wird diese Basis in Felder unterteilt. Somit kann bspw. ein räumliches Raster bereitgestellt werden, dessen Größe über einen Erfassungsbereich von Sensoren, die die Sensorsignale bereitstellen, festgelegt ist. Eine Auflösung der Basis kann je nach Anwendung beliebig fein gewählt werden.

In einer eindimensionalen Basis können die Felder bspw. als Intervalle oder Abschnitte einer Geraden oder Strecke bestimmt sein. Bei einer zweidimensionalen Basis sind die Felder bspw. als Rechtecke und insbesondere als Quadrate mit geeignet zu wählenden Seitenlängen festzulegen. Bei einer dreidimensionalen Basis sind die Felder bspw. als Quader und insbesondere als Würfel festzulegen. Je nach Anwendung oder Ausbildung der verwendeten Sensoren kann auch vorgesehen sein, die Felder der Basis über Polarkoordinaten im zweidimensionalen Fall und Kugel- oder Zylinderkoordinaten im dreidimensionalen Fall festzulegen. Die Basis ist in derartigen Ausgestaltungen über einen oder zwei Winkel und einen Abstand von einem zentralen Punkt oder einer zentralen Achse, in der Regel der z-Achse, definiert.

Falls für mindestens ein Feld der Basis ein Objekt detektiert wird, kann dies durch einen entsprechenden Wert für die mindestens eine als Position vorgesehene kinematische Größe und somit ein mögliches Attribut für mindestens eine Zelle, die dem mindestens einen Feld zugeordnet ist, berücksichtigt werden. Die Bewegung dieses Objekts wird durch weiteres Anhängen von Werten für die Geschwindigkeit und/oder die Beschleunigung berücksichtigt. Die zur Durchführung des Verfahrens verwendete Basis kann je nach Anwendung in einer, zwei oder allen drei Raumdimensionen aufgespannt sein.

Falls ein Feld der Basis nicht belegt sein sollte, wenn sich also in diesem Feld kein Objekt oder Körper befindet, ist eine Bereitstellung eines Werts für die Position nicht unbedingt erforderlich.

Neben der mindestens einen kinematischen Größe als ein mögliches, an eine Zelle anzuhängendes Attribut, kann der mindestens einen Zelle mindestens ein Wert für ein weiteres Attribut angehängt werden. Bei einem derartigen Attribut kann es sich um Wahrscheinlichkeitswerte handeln, über die eine Aussage darüber getroffen werden kann, mit welcher Wahrscheinlichkeit ein Objekt in einem bestimmten Bereich der Basis ggf. auch zeitabhängig angeordnet ist. Derartige Wahrscheinlichkeitswerte können in Ausgestaltung auch zur Bereitstellung der mindestens einen zweiten kinematischen Größe benutzt werden.

In weiterer Ausgestaltung kann vorgesehen sein, dass über den mindestens einen Wert des mindestens einen Attributs eine Verknüpfung von Zellen bereitgestellt wird, so dass ein Aufenthaltsort eines räumlich ausgedehnten Objekts, das sich innerhalb der Basis über mehrere Felder oder Punkte erstreckt, schlüssig nachvollzogen werden kann.

Bei einer möglichen Anwendung des Verfahrens ist vorgesehen, dass mit den verarbeiteten Sensorsignalen eine Umfeldmodellierung durchgeführt wird. Somit ist es möglich, Objekte innerhalb eines Umfelds zu erfassen, wobei vorgesehen ist, dass sich das Umfeld auf jenen Raumbereich als Basis erstreckt, der durch mindestens einen Sensor erfasst wird.

In einer weiteren Anwendung des Verfahrens kann vorgesehen sein, dass mit den verarbeiteten Sensorsignalen, die als Informationsträger regelmäßig Sensordaten bereitstellen, eine Sensordatenfusion durchgeführt wird.

Das Verfahren kann in Ausgestaltung für ein Fahrzeug verwendet werden. Dabei kann dieses Fahrzeug mindestens eine Fahrerassistenzeinrichtung aufweisen, die zur Durchführung des Verfahrens geeignet ist.

Die erfindungsgemäße Fahrerassistenzeinrichtung weist ein Modul zum gitterbasierten Verarbeiten von Sensorsignalen auf, wobei das Modul dazu ausgebildet ist, jeweils einem Feld einer Basis, die über mindestens eine erste kinematische Größe definiert ist, mindestens eine Zelle eines Gitters zuzuordnen und der Zelle mindestens einen Wert für mindestens eine kinematische Größe, die aus mindestens einem Sensorsignal abgeleitet wird, anzuhängen.

Diese Fahrerassistenzeinrichtung ist zur Durchführung sämtlicher Schritte des erfindungsgemäßen Verfahrens geeignet. Einzelne Schritte des Verfahrens können von dem mindestens einen Modul durchgeführt werden.

Mit dem Verfahren ist demnach eine günstige Implementierung einer zellgitterbasierten Umfeldmodellierung zur Verarbeitung von Sensorsignalen und zur Sensordatenfusion, insbesondere für Fahrerassistenzsysteme, möglich.

Bei einer Ausführung der Erfindung kann ein mehrdimensionaler Zustandsraum, der beispielsweise Positions-, Geschwindigkeits- und Beschleunigungsdaten mit jeweils mindestens zwei Dimensionen enthält, durch Verwendung von Attributen aus den Sensorsignale in einen dreidimensionalen Zustandsraum überführt werden. Somit wird gegenüber vollständigen Implementierungen, die bspw. mehrdimensionale Positions-, Geschwindigkeits-, und Beschleunigungsdaten verwenden, ein deutlich verringerter Speicher- und Rechenbedarf benötigt. Hierzu ist vorgesehen, dass ein Zustandsraum durch die Basis festgelegt werden kann. Zustände können über die Attribute und insbesondere die mindestens eine kinematische Größe für jede Zelle bestimmt werden.

Das erfindungsgemäße Computerprogramm umfasst Programmcodemittel, um alle Schritte eines vorstehend erörterten Verfahrens durchzuführen, wenn das Computerprogramm auf einem Computer oder einer entsprechenden Recheneinheit, insbesondere in einer beschriebenen Fahrerassistenzeinrichtung, ausgeführt wird.

Das erfindungsgemäße Computerprogrammprodukt umfasst Programmcodemittel, die auf einem computerlesbaren Datenträger gespeichert sind, um alle Schritte eines erfindungsgemäßen Verfahrens durchzuführen, wenn das Computerprogramm auf einem Computer oder einer entsprechenden Recheneinheit, insbesondere in einer erfindungsgemäßen Fahrerassistenzeinrichtung, ausgeführt wird.

Bei einer Ausgestaltung der Erfindung ist vorgesehen, den Zustandsraum und damit das Gitter nur aus Orts- bzw. Positionszuständen aufzubauen und die weiteren Zustandsdaten, bspw. für Geschwindigkeit und Beschleunigung den nunmehr orts- oder positionsbezogenen Zellen des Gitters als einfache Attribute anzuhängen.

Mit dem Verfahren ist es regelmäßig möglich, einen mehrdimensionalen Zustandsraum in einen dreidimensionalen Zustandsraum abzubilden, wobei die dritte Dimension dieses Zustandsraums nur aus wenigen Attributen oder Elementen besteht, nämlich bspw. aus einem Wahrscheinlichkeitswert für die Zelle selbst und aus je einem Attribut für die Geschwindigkeitsdaten und optional für die Beschleunigungsdaten und weitere mögliche Attribute. Über den Wahrscheinlichkeitswert kann typischerweise eine Aussage darüber getroffen werden, ob sich in jenem Feld oder jenem Punkt der Basis, dem die Zelle zugeordnet ist, ein Objekt befindet.

Mit den Werten aus dem im Stand der Technik beschriebenen numerischen Beispiel ergibt sich ein Zustandsraum mit 1024 x 512, also 524288 Feldern für eine als Ortsraum ausgebildete Basis bzw. eine Grundfläche. Bei gleicher Auflösung wie bei voranstehend beschriebenen Beispiel, also 4 Byte für einen als Float abgelegten Wahrscheinlichkeitswert plus 4 mal je ein Byte für die als Attribute abgelegten Zustände für die Geschwindigkeiten in x- und y- Richtung vx, vy, sowie für die Beschleunigung in x- und y- Richtung ax, ay ergibt sich ein Speicherbedarf von insgesamt 8 Bytes für die Zellen eines Felds der Basis. Daraus ergibt sich ein Speicherbedarf von 4194304 Byte, bzw. 4096 kB, bzw. 4 MB für den gesamten Zustandsraum.

Die Abbildung auf den dreidimensionalen Zustandsraum kann so erfolgen, dass der von einem Sensor detektierte Wert oder der aus dem Sensorsignal bereitgestellte Wert als Attribut eingetragen und somit angehängt wird. Überträgt der Sensor als möglichen Wahrscheinlichkeitswert eine stochastische Verteilung für einen Zustandswert, beispielsweise in Form einer Gaußverteilung, die durch einen Erwartungswert und eine Varianz charakterisiert wird, dann bietet es sich an, neben diesem Erwartungswert selbst ein weiteres Attribut für die Varianz vorzusehen. Die Varianz kann dann u.a. auch dazu verwendet werden, eine gewichtete Mittelwertbildung durchzuführen, wenn beispielsweise mehrere Messwerte in ein Feld der Basis fallen. Demnach ist es möglich, für eine Zelle, die diesem Feld zugeordnet ist, als ein Attribut einen Wert oder ein Maß für eine Wahrscheinlichkeit festzulegen.

In Ausgestaltung können Intervalle zur Festlegung der Felder beliebig klein gewählt werden, so dass mit dem Verfahren eine entsprechende Auflösung bereitgestellt werden kann. Außerdem kann vorgesehen sein, dass für jede Zelle oder Positionszelle nur noch ein Wert für jedes Attribut und nicht mehr ein ganzes Datenfeld zur Listung von Werten für jedes Attribut geführt werden muss. Bei hinreichend kleiner Positionsauflösung des Gitters kann sich innerhalb eines Feldes nur ein detektiertes Objekt befinden. Vor diesem Hintergrund ist es typischerweise nicht notwendig, ein ganzes Datenfeld zur Listung von Werten vorzusehen.

Berücksichtigt man jedoch möglich Mess- und Schätzunsicherheiten der Sensoren, dann kann vorgesehen sein, dass sich die Sensorsignale der von den Sensoren durchgeführten Messungen unterschiedlicher Objekte in einem Feld überlappen. Für diesen Fall kann es sinnvoll sein, mehrere Werte für jedes Attribut anzulegen. In der Praxis haben sich zwei mögliche Werte als i. d. R. ausreichend erwiesen. Diese können wiederum für ein sogenanntes Multi-Hypothesen-Tracking-Verfahren verwendet werden.

Es kann in einem weiteren Attribut in einer Zelle für ein Feld eine durch die Sensoren oder eine Sensorik detektierte Verknüpfung mit mindestens einem anderen üblicherweise benachbarten Feld abgelegt werden. Wird beispielsweise ein vorausfahrendes Fahrzeug durch einen Sensor detektiert, das sich in seiner Breite über drei innerhalb der Basis nebeneinander liegende Felder erstreckt, dann kann in Zellen, die diesen Feldern zugeordnet sind, als Attribut abgelegt werden, dass diese Zellen ein gemeinsames Objekt innerhalb der Felder beschreiben. Durch Kenntnis einer solchen Eigenschaft ist eine Prädiktion der Verteilung der Wahrscheinlichkeitsmassen im Gitter in die Zukunft durchführbar, da hierdurch eine exaktere Prädiktion möglich ist.

Es kann in einem weiteren Attribut für einige Zellen im Zellgitter das Ergebnis einer Klassifikation durch die Sensorik abgelegt werden. Wird beispielsweise durch einen videobasierten Klassifikationsalgorithmus erkannt, dass sich ein als Stein klassifiziertes Objekt an einer bestimmten Position befindet, dann kann beispielsweise ein Attribut für eine sog. Bewegungsfähigkeit bereitgestellt werden. Zellen, die Feldern zugeordnet sind, die durch den Stein belegt sind, kann bspw. die Eigenschaft "unbeweglich" zugeordnet. Durch Kenntnis einer solchen Eigenschaft kann ebenfalls eine Prädiktion der Verteilung der Wahrscheinlichkeitsmassen im Gitter in die Zukunft durchgeführt werden, da auch hier nunmehr eine exaktere Prädiktion möglich ist.

Als zusätzliches Attribut kann für jede Zelle im Zellgitter die durch eine als Videosensorik ausgebildete Sensorik detektierte Farbe von Objekten in dem Bereich der jeweiligen Felder abgelegt werden. Auf diese Weise kann es später besser möglich sein, über die Zellen bestimmte Felder im Gitter wieder zu finden.

Des weiteren kann als Attribut vorgesehen sein, für jede Zelle der Basis oder des Zellgitter ein beispielsweise durch die Videosensorik detektiertes Muster in dem Bereich des jeweiligen zugeordneten Felds abzulegen. Auch auf diese Weise ist es später bei einer Auswertung einfacher, bestimmte Felder durch Auswertung von Attributen der Zellen im Gitter wieder zu finden.

Es ist zudem möglich, weitere durch Sensoren detektierte oder interessierende Eigenschaften in weiteren Attributen in Zellen abzulegen. Dabei kann vorgesehen sein, dass die Attribute durch Verarbeitung der Sensorsignale oder zugehöriger Sensordaten ermittelt werden.

Weitere Vorteile und Ausgestaltungen der Erfindung ergeben sich aus der Beschreibung und den beiliegenden Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

Die Erfindung ist anhand von Ausführungsformen in den Zeichnungen schematisch dargestellt und wird im folgenden unter Bezugnahme auf die Zeichnungen ausführlich beschrieben.
Figur 1 zeigt in schematischer Darstellung eine Ausführungsform eines durch das erfindungsgemäßen Verfahren bereitgestellten Zustandsraums.
Figur 2 zeigt in schematischer Darstellung einer Basis, in der sich ein Fahrzeug befindet.

### Ausführungsformen der Erfindung

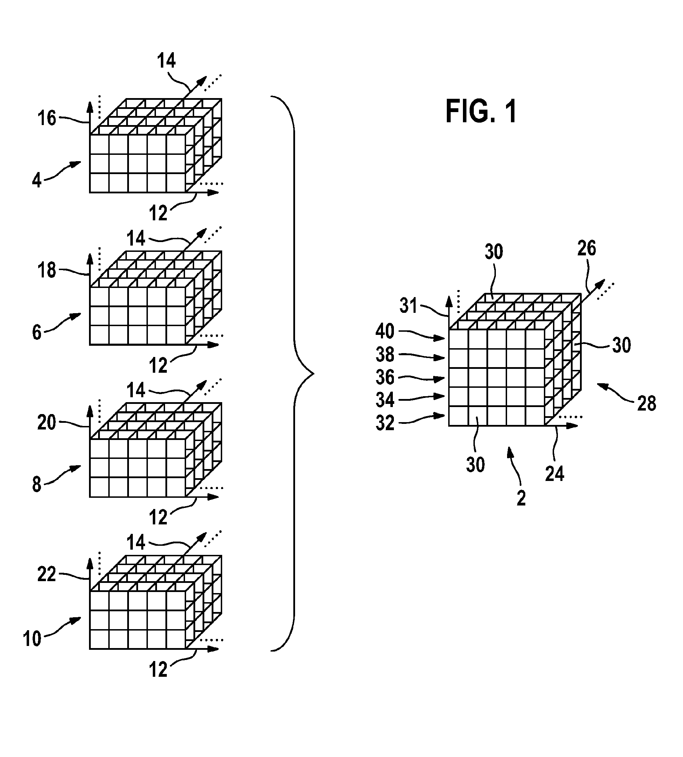

Figur 1 zeigt in schematischer Darstellung rechts neben der geschweiften Klammer einen dreidimensionalen, gitterbasierten Zustandsraum 2, der durch eine Ausführungsform des erfindungsgemäßen Verfahrens bereitgestellt wird.

Links von der geschweiften Klammer zeigt Figur 1 vier gitterbasierte Zustandsräume 4, 6, 8, 10, die insgesamt eine mehrdimensionalen Zustandsraum bilden, wie er bei bisherigen Verfahren benutzt wird.

Dabei weist jeder dieser Zustandsräume 4, 6, 8, 10 eine erste Achse 12 in x-Richtung und eine zweite Achse 14 in y-Richtung auf, zudem sind alle vier Zustandsräume 4, 6, 8, 10 aus Zellen aufgebaut. Ein erster Zustandsraum 4 ist zur Darstellung einer Geschwindigkeit in x-Richtung vorgesehen, die entlang einer dritten Achse 16 aufgetragen ist. Bei einem zweiten Zustandsraum 6 ist entlang einer dritten Achse 18 eine Geschwindigkeit in y-Richtung aufgetragen. Bei einem dritten Zustandsraum 8 ist entlang einer dritten Achse 20 eine Beschleunigung in x-Richtung aufgetragen. Bei einem vierten Zustandsraum 10 ist vorgesehen, dass entlang einer dritten Achse 22 eine Beschleunigung in y-Richtung aufgetragen ist.

Bei dem über die Ausführungsform des erfindungsgemäßen Verfahrens bereitgestellten dreidimensionalen Zustandsraum 2 wird über eine erste Achse 24 und eine zweite Achse 26 als Ortsraum eine aus Feldern gebildete Basis 28 aufgespannt, wobei entlang der ersten Achse 24 eine x-Richtung und entlang der zweiten Achse 26 eine y-Richtung aufgetragen ist.

Dieser gitterbasierte Zustandsraum 2 weist eine Vielzahl von Zellen 30 auf, wobei jede Zelle einem Feld der Basis 28 zugeordnet ist. Zudem wird jeder Zelle 30 als Attribut mindestens ein Wert für mindestens eine kinematische Größe angehängt. Die Zellen 30 für die Attribute sind innerhalb des Gitters des vorliegenden Zustandsraums 2 entlang einer dritten Achse 31 aufgetragen.

In dem vorliegenden Ausführungsbeispiel ist Zellen 30 einer ersten Ebene 32 entlang der dritten Achse 31 jeweils ein Wert für eine Position p angehängt. Zellen 30 einer zweiten Ebene 34 entlang der dritten Achse 31 ist jeweils ein Wert für eine Geschwindigkeit vx in x-Richtung angehängt. Den Zellen einer dritten Ebene 36 entlang der dritten Achse 31 ist jeweils ein Wert für eine Geschwindigkeit vy in y-Richtung angehängt. Den Zellen einer vierten Ebene 38 entlang der dritten Achse 31 ist jeweils ein Wert für eine Beschleunigung ax in x-Richtung angehängt. Den Zellen einer fünften Ebene 40 entlang der dritten Achse 31 ist jeweils ein Wert für eine Beschleunigung ay in y-Richtung angehängt.

Die Informationen, die in den vier Zustandsräumen 4, 6, 8, 10 und somit einem mehrdimensionalen Zustandsraum enthalten sind, können durch die Ausführungsform des erfindungsgemäßen Verfahrens in nur einen Zustandsraum 2 übertragen und somit abgebildet werden.

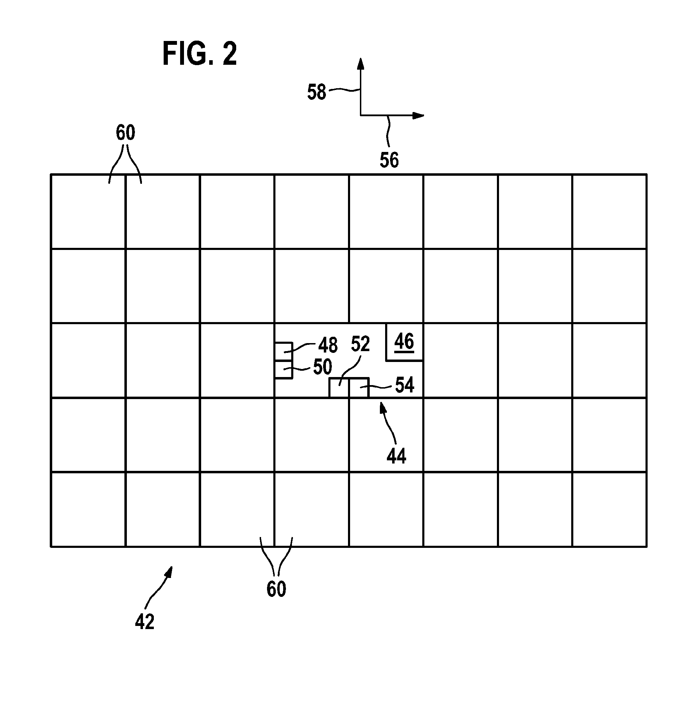

Figur 2 zeigt in schematischer Darstellung einen als Basis 42 vorgesehenen Ortsraum, in dem sich ein Fahrzeug 44 befindet. Das Fahrzeug 44 umfasst eine Ausführungsform einer Fahrerassistenzeinrichtung 46 sowie vier Sensoren 48, 50, 52, 54, die zum Erfassen kinematischer Größen und zur Bereitstellung darauf basierender Sensorsignale ausgebildet sind. Es ist vorgesehen, dass die Sensorsignale zur Verarbeitung den Fahrerassistenzeinrichtung 46 übermittelt werden.

Dabei ist ein erster Sensor 48 dazu ausgebildet, als kinematische Größe eine Position mindestens eines Objekts in einer ersten Raumrichtung 56 zu bestimmen. Über einen zweiten Sensor 50 ist als kinematische Größe eine Geschwindigkeit des mindestens einen Objekts in der ersten Raumrichtung 56 zu bestimmen. Ein dritter Sensor 52 ist dazu ausgebildet, als kinematische Größe eine Position des mindestens einen Objekts in einer zweiten Raumrichtung 58 zu bestimmen. Über einen vierten Sensor 54 wird in vorliegender Ausführungsform als kinematische Größe eine Geschwindigkeit des mindestens einen Objekts in der zweiten Raumrichtung 56 bestimmt.

Bei einer Ausführungsform eines erfindungsgemäßen Verfahrens, das durch die Fahrerassistenzeinrichtung 46 durchgeführt wird, ist vorgesehen, dass die Basis 42 in den beiden Raumrichtungen 56, 58 als erste kinematische Größen aufgespannt wird. Diese Basis 42 ist aus einem Raster quadratischer Felder 60 gebildet.

Bei einem gitterbasierten Verarbeiten von Sensorsignalen der Sensoren 48, 50, 52, 54 wird jeweils eine Zelle eines Gitters einem Feld 60 der Basis 42 zugeordnet. Jeder Zelle wird mindestens ein Wert für mindestens eine zweite kinematische Größe, die aus mindestens einem Sensorsignal abgeleitet wird, angehängt.

Somit ist es möglich, über die Fahrerassistenzeinrichtung 46 bei einer Durchführung einer Variante des erfindungsgemäßen Verfahrens eine Umfelderkennung für das Fahrzeug 44 innerhalb der Basis 42 durchzuführen. Dabei können Objekte rechtzeitig erkannt werden. Weiterhin ist es möglich, dass auf ggf. gefährliche Situationen im Straßenverkehr reagiert werden kann.

## Patentansprüche

1. Verfahren zum gitterbasierten Verarbeiten von Sensorsignalen, bei dem einem Feld (60) einer Basis (28, 42), die über mindestens eine erste kinematische Größe definiert wird, mindestens eine Zelle (30) eines Gitters zugeordnet wird, und bei dem der Zelle (30) mindestens ein Wert für mindestens eine zweite kinematische Größe, die aus mindestens einem Sensorsignal abgeleitet wird, angehängt wird.

2. Verfahren nach Anspruch 1, bei dem als die mindestens eine kinematische Größe eine Position berücksichtigt wird.

3. Verfahren nach Anspruch 1 oder 2, bei dem als die mindestens eine kinematische Größe ein Winkel berücksichtigt wird.

4. Verfahren nach einem der voranstehenden Ansprüche, bei dem als die mindestens eine kinematische Größe eine Geschwindigkeit berücksichtigt wird.

5. Verfahren nach einem der voranstehenden Ansprüche, bei dem als die mindestens eine kinematische Größe eine Beschleunigung berücksichtigt wird.

6. Verfahren nach einem der voranstehenden Ansprüche, bei dem der Zelle (30) mindestens ein Wert für mindestens ein Attribut angehängt wird.

7. Verfahren nach einem der voranstehenden Ansprüche, bei dem über den mindestens einen Wert des mindestens einen Attributs einen Verknüpfung von Zellen (30) bereitgestellt wird.

8. Verfahren nach einem der voranstehenden Ansprüche, bei dem mit den verarbeiteten Sensorsignalen eine Umfeldmodellierung durchgeführt wird.

9. Verfahren nach einem der voranstehenden Ansprüche, bei dem mit den verarbeiteten Sensorsignalen eine Sensordatenfusion durchgeführt wird.

10. Verfahren nach einem der voranstehenden Ansprüche, das für ein Fahrzeug (44) verwendet wird.

11. Fahrerassistenzeinrichtung, die ein Modul zum gitterbasierten Verarbeiten von Sensorsignalen aufweist, wobei das Modul dazu ausgebildet ist, jeweils einem Feld (60) einer Basis (28, 42), die über mindestens eine erste kinematische Größe zu definieren ist, mindestens eine Zelle (30) eines Gitters zuzuordnen und der Zelle (30) mindestens einen Wert für mindestens eine zweite kinematische Größe, die aus mindestens einem Sensorsignal abgeleitet wird, anzuhängen.

12. Computerprogramm mit Programmcodemitteln, um alle Schritte eines Verfahrens nach einem der Ansprüche 1 bis 10 durchzuführen, wenn das Computerprogramm auf einem Computer oder einer entsprechenden Recheneinheit, insbesondere in einer Fahrerassistenzeinrichtung (46) nach Anspruch 11, ausgeführt wird.

13. Computerprogrammprodukt mit Programmcodemitteln, die auf einem computerlesbaren Datenträger gespeichert sind, um alle Schritte eines Verfahrens nach einem der Ansprüche 1 bis 10 durchzuführen, wenn das Computerprogramm auf einem Computer oder einer entsprechenden Recheneinheit, insbesondere in einer Fahrerassistenzeinrichtung (46) nach Anspruch 11, ausgeführt wird.
